# EUROPEAN PATENT SPECIFICATION

(11) **EP 1 560 066 B1**
(45) Date of publication and mention of the grant of the patent: **19.03.2008**
(21) Application number: 05100224.4
(22) Date of filing: 14.01.2005
(51) Int. Cl.: G03B 9/06

(54) **Motor-driven diaphragm for a camera**
Motorisierte Blende für eine Kamera
Diaphragme motorisé pour une caméra

(30) Priority: 25.02.2004 KR 2004012625; 20.01.2004 US 536986 P
(43) Date of publication of application: 03.08.2005
(73) Proprietor: SAMSUNG ELECTRONICS CO., LTD., Suwon-si, Gyeonggi-Do 442-742 (KR)
(72) Inventor: JEONG, Yeong-hyo, Yeongtong-gu Siwon-si Gyeonggi-do (KR); OH, Eui-kuen, Yeongtong-gu Suwon-si Gyenonggi-do (KR)
(74) Representative: Geary, Stuart Lloyd

(56) References cited:
- US-A- 4 378 146
- US-A- 4 491 401
- US-A- 4 693 580
- US-A- 4 695 145
- US-A- 4 763 150
- PATENT ABSTRACTS OF JAPAN vol. 008, no. 259 (P-317), 28 November 1984 (1984-11-28) -& JP 59 129841 A (CANON KK), 26 July 1984 (1984-07-26)

## Description

The present invention relates to an aperture setting apparatus for a camera, the apparatus comprising an iris diaphragm and an electric motor, having a rotor within a stator, for driving the iris diaphragm for setting the aperture size.

Some camcorders are capable of capturing both still and moving images. Such camcorders generally includes a camera device, a signal converter, a deck device for recording/reproducing captured images and a display device. Cassette tapes are widely used as the recording medium in camcorders.

Recently, research and development have been actively undertaken to develop a compact image information recording/reproducing apparatus making use of a hard disk drive as the recording medium. The use of a hard disk drive obviates the need for a tape deck allowing more compact camcorders to be produced.

The camera device of a camcorder is installed in the camcorder body as one unit module. The camera device generally includes a lens barrel that houses various lenses such as a focusing lens and a zoom lens. Additionally, a motor is usually included in the lens barrel to drive the focusing lens and the zoom lens.

An iris diaphragm controls the amount of light entering the lens barrel. The iris diaphragm is operated by a separate driving motor which is installed outside the lens barrel.

In the conventional construction as described above, a plurality of drive motors are installed outside the lens barrel.

Additionally, the lens barrel itself is usually cylindrical. However, the external mounting of the motors results in an angular overall configuration.

US4695145 discloses camera apparatus comprising a lens barrel within which is installed an iris diaphragms and a motor having a rotor and a stator for driving the lens barrel. The apparatus is arranged such that the light that passes through the aperture set by the iris diaphragm can also pass through the centre of the rotor.

According to the present invention, there is provided an apparatus comprising: a lens barrel; a zoom lens module installed within the lens barrel; a focusing lens module installed within the lens barrel; an iris diaphragm movably installed between the zoom lens module and the focusing lens module, to adjust an amount of entering light in accordance with a moving position thereof; and a driving unit installed within the lens barrel to drive the iris diaphragm, to provide a light path at a center thereof through which the light that has passed the zoom lens module is passed, the driving unit comprising a motor housing, a stator and a rotor within the stator, the stator comprising a hollow bobbin having a coil wound around an outer circumference characterised by the stator further comprising a first stator member to engage with a first end of the hollow bobbin, and having first fastening teeth formed at equal intervals; and a second stator member to engage with a second end of the hollow bobbin so as to be in alignment with the first stator member, the second stator member having second fastening teeth formed at equal intervals and in a staggered manner with respect to the first fastening teeth, and the hollow bobbin further comprising a plurality of teeth slots in an inner surface to receive the first and the second fastening teeth.

The iris diaphragm may be operable to control an aperture to adjust the amount of entering light and the rotor may be annular and coaxially aligned with said aperture..

Preferably, the iris diaphragm comprises a plurality of blades pivotably mounted to swing radially inwards and outwards to set said aperture. More preferably, each blade is swung to set the aperture by a respective pin mounted to said rotor for rotation therewith.

Apparatus according to the present invention may be used in various types of cameras, including camcorders.

According to the invention, there is also provided a method of assembling a motorised camera, including an iris diaphragm that is controlled by a motor in a motor housing inside a lens barrel of the camera, the method comprising: providing a stator assembly in the motor housing; rotatably inserting a rotor, with a bearing on an outer circumference thereof, in the stator assembly at a distance from an inner circumference of the stator assembly such that the rotor is not supported in the stator assembly; characterised by the method further comprising: assembling the stator assembly from an annular bobbin comprising a plurality of teeth slots in an inner surface thereof and a first and a second stator members having first and second circumferentially-spaced fastening teeth by receiving the first and second fastening teeth in said teeth slots in a staggered manner; and engaging first and second housings with each other to enclose the stator assembly, the second housing including guide slits such that driving pins protruding from the rotor are inserted through and supported by the guide slits and the bearing is supported by the first housing.

Embodiments of the present invention will now be described, by way of example, with reference to the accompanying drawings, in which:
Figure 1 is a schematic sectional view of a camera apparatus according to the present invention;
Figure 2 is an exploded perspective view of the iris diaphragm driving apparatus of the camera apparatus of Figure 1;
Figure 3 is a sectional view of the iris diaphragm driving apparatus of Figure 2;
Figure 4 is a plan view illustrating the iris diaphragm of Figure 3 assembled with a motor;
Figures 5A and 5B are perspective views of the rotor and stator assemblies for the apparatus of Figure 2;
Figures 6A and 6B are perspective views of rotor and stator assemblies for the apparatus of Figure 2;
Figure 7 is a perspective view of the iris diaphragm driving apparatus of Figure 2;
Figures 8A and 8B are plan views illustrating the iris diaphragm of Figure 4 operating in accordance with the movement of the rotor; and
Figures 9 and 10 are schematic plan views illustrating another iris diaphragm driving apparatus according to the present invention.

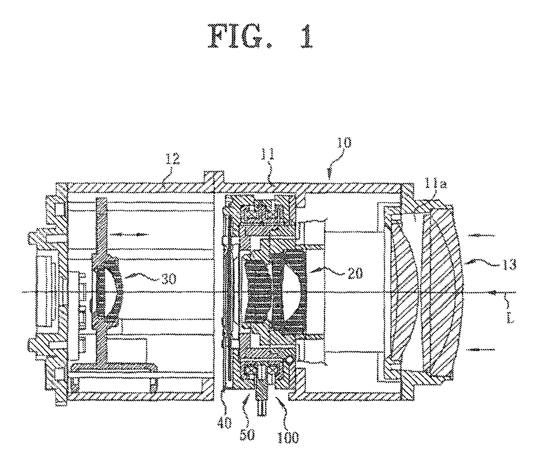

Referring to Figure 1, a camera apparatus according to the present invention comprises a cylindrical lens barrel 10, a zoom lens module 20 and a focusing lens module 30 installed inside the lens barrel 10, an iris diaphragm 40 for adjusting the amount of light incident on the image sensor and a motor 50 for driving the iris diaphragm 40.

The cylindrical lens barrel 10 comprises a pair of cylinders 11, 12 which are engaged with each other. The first cylinder 11 comprises an objective lens module 13 in an entry part 11a at the front end of the first cylinder 11. The second cylinder 12 is engaged with a substrate (not shown) having a CCD module thereon at its rear end.

The zoom lens module 20 is movable within the cylindrical lens barrel 10. More specifically, the zoom lens module 20 is formed to be moved forward and backward by a corresponding moving device (not shown) in a direction substantially parallel to an entering light L, i.e. axially within the lens barrel 10. In this way, the camcorder can zoom in on and out from a subject.

The focusing lens module 30 is also movable within the cylindrical lens barrel 10. The focusing lens module 30 is installed behind the zoom lens module 20 and is used to focus the image to be captured on the image sensor. The corresponding moving device (not shown) moves the focusing lens module 30 forward and backward along a direction that is substantially parallel to the entering light L, i.e. axially within the lens barrel 10. Any adequate general method or apparatus may serve as the moving device of the zoom lens module 20 and the focusing lens module 30. In the present example, guide shafts are installed within the cylindrical lens barrel 10 to support the focus lens modules 20, 30. Motor-driven lead screws are used to move the modules 20, 30.

The iris diaphragm 40 is installed within the cylindrical lens barrel 10 between the modules 20, 30. The iris diaphragm 40 controls the amount of light that reaches the photosensor. The iris diaphragm 40 can be expanded and retracted radially. The iris diaphragm 40 is described in detail below.

The motor 50 is installed within the cylindrical lens barrel 10. A stepping motor is employed to provide a rotary force in increments.

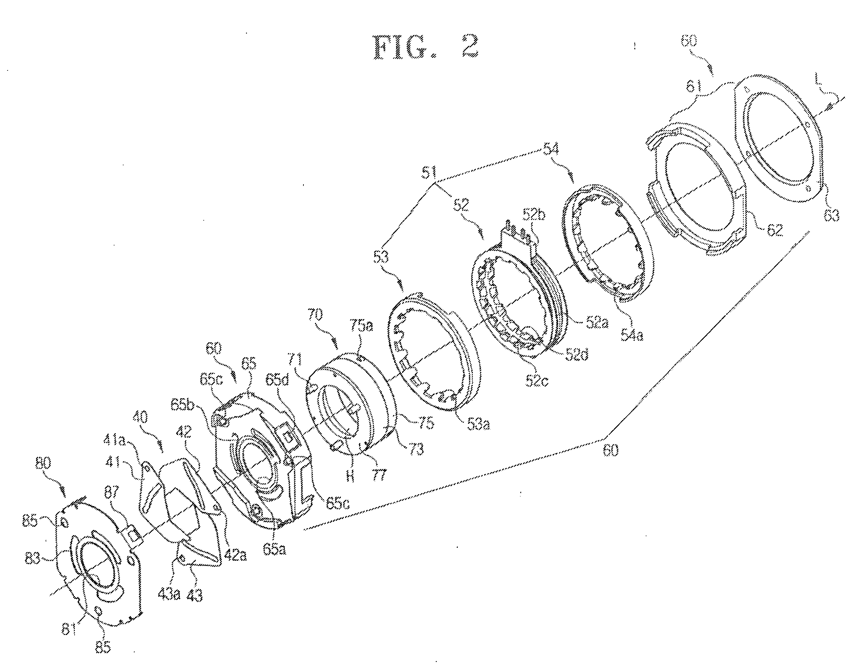

Referring to Figure 2, the motor 50 comprises a stator assembly 51, a motor housing 60 and a rotor 70 installed within the stator assembly 51.

The stator assembly 51 is installed within the motor housing 60. The stator assembly 51 comprises a substantially annular bobbin 52 and first and second stator members 53, 54 that are engaged with respective, opposite ends of the annular bobbin 52.

A coil 52a is wound around the annular bobbin 52 and is electrically connected with an external terminal via a terminal part 52b, provided on an outer surface of the annular bobbin 52.

As mentioned above, the first and the second stator members 53, 54 are engaged with respective ends of the annular bobbin 52 so as to be in alignment with each other. The stator members 53, 54 are provided with circumferentially-spaced fastening teeth 53a, 54a. The circumferentially-spaced fastening teeth 53a, 54a engage with slots in the inner surface of the annular bobbin 52 in a staggered fashion. Accordingly, the annular bobbin 52 comprises a plurality of teeth slots 52c, 52d to receive the circumferentially-spaced fastening teeth 53a, 54a. The teeth slots 52c, 52d are also formed in a staggered fashion. When electric signals are input into the coil 52a, the fastening teeth 53a, 54a are magnetised according to the input pattern of the electric signals and, therefore, becomeelectromagnets. As a result of the electro-magnetic force that is generated between the electromagnets, i.e. the circumferentially-spaced fastening teeth 53a, 54a and the rotor 70, the rotor 70 is rotated by a predetermined anglular step.

The rotor 70 is rotatable within the stator assembly 51. The rotor 70 has a centre hole H, formed therein, through which the entering light L passes. To permit the light L to pass, the rotor 70 is not provided with a rotary shaft. The rotor 70 has a plurality of driving pins 71 for moving the iris diaphragm 40. In this embodiment, the iris diaphragm 40 has three diaphragm blades 41, 42, 43. The three driving pins 71 are provided at equal intervals to correspond to the diaphragm blades 41, 42, 43.

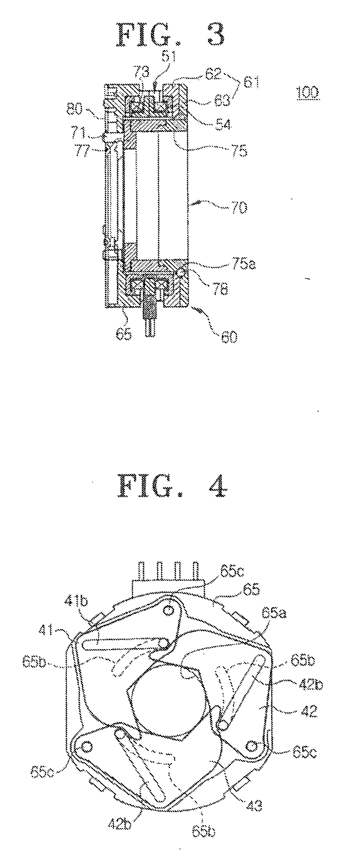

Referring to Figure 3, the rotor 70 in this embodiment comprises a cylindrical magnet 73, a tubular sleeve 75, engaged with one end of the cylindrical magnet 73, and a plate 77, engage with the other end of the cylindrical magnet 73. The magnet 73 is magnetized so that north and south poles are arranged alternately around the circumference of the rotor 70. The tubular sleeve 75 takes on the same cylindrical configuration as the magnet 73 and is engaged with one end of the magnet 73. A plurality of bearing receiving holes 75a are formed along the outer circumference of the tubular sleeve 75 such that, with the bearing 78 received in the bearing receiving holes 75a, the tubular sleeve 75 is supported in contact with the inner surface of the motor housing 60. The plate 77 allows the driving pins 71 to protrude therefrom. The driving pins 71 may be formed by insert-molding during the manufacturing of the plate 77. The driving pins 71 are movably supported on the motor housing 60. The rotor 70 is hollow at a centre portion of the inner circumference, and rotatably disposed within the stator assembly 51.

Alternatively, the rotor 70 may be formed by integrally forming the magnet 73, the tubular sleeve 75 and the plate 77. In this case, the entire rotor 70 is formed of a magnetic material and the driving pins 71 may also be integrally formed thereon by insert-molding.

The motor housing 60 is firmly mounted in the cylindrical lens barrel 10. The motor housing 60 comprises first and second housings 61, 65 which house the stator assembly 51.

The first housing 61 supports the bearing 78 of the rotor 70. As shown in Figures 2 and 3, the first housing 61 may enclose the second stator member 54 when the first housing 61 is engaged with the second housing 65. The first housing 61 may be formed with separate parts, such as front and rear brackets 62, 63. The brackets 62, 63 are separately fabricated and are engaged with the second stator member 54. The boundary between the brackets 62, 63 may act as a guidance groove to guide the bearing 78. That is, during the rotation of the rotor 70, the bearing 78 is guided along the boundary between the brackets 62, 63 to support the rotor 70. The brackets 62, 63 may, of course, be integrally formed with each other and, in this case, a guide groove is formed along the inner circumference of the first integrally-formed housing 61.

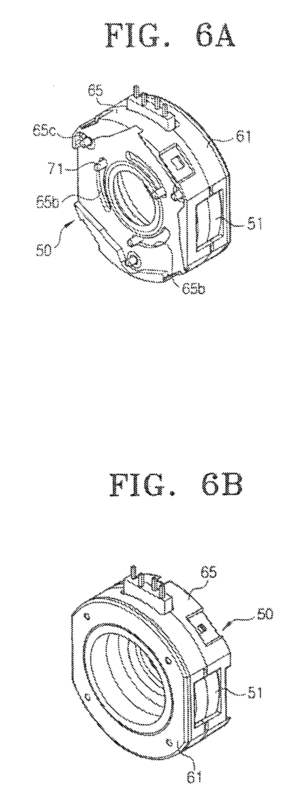

As shown in Figures 6A and 6B, the second housing 65 is engaged with the first housing 61 with the stator assembly 51 placed therebetween. The second housing 65 has a centre aperture 65a which is opened and closed by the iris diaphragm 40. There are a plurality of guide slits 65b formed around the centre aperture 65a within which the driving pins 71 are disposed and moved. The guide slits 65b are formed with lengths corresponding to the rotational angle of the rotor 70. The driving pins 71 are supported in the state of being inserted through the guide slits 65b. The driving pins 71 are moved along the guide slits 65b by the rotating rotor 70.

The second housing 65 has shaft bosses 65c on which the diaphragm blades 41, 42 and 43 are rotatably supported. In this embodiment, three shaft bosses 65c are provided to correspond to the diaphragm blades 41, 42 and 43. The shaft bosses 65c are distanced apart from the center aperture 65a as far as possible. This is to enable efficient opening and closing of the central aperture 65a even when the diaphragm blades 41, 42, 43 are rotated about the shaft bosses 65c by a small angle.

Referring to Figure 4, each of the diaphragm blades 41, 42, 43 has a cam slit 41b, 42b, 43b to receive respective driving pins 71. The diaphragm blades 41, 42, 43 are all the same size and shape. According to the movement of the driving pins 71, which are move within the cam slits 41b, 42b, 43b, the diaphragm blades 41, 42, 43 are rotated, to adjust the size of the central aperture 65a so as to adjust the amount of light passing through to the image sensor. In the present embodiment, the cam slits 41b, 42b, 43b are linear.

By adjusting the angular position of the rotor 70 appropriately, the linear cam slits 41b, 42b, 43b adjust the size of the central opening of the iris diaphragm 40, i.e. adjust the device's f-number.

Referring to Figure 2, a housing cover 80 is additionally provided. The housing cover 80 is removably attached to the second housing 65 and prevents the iris diaphragm 40 from separating from the second housing 65. The housing cover 80 has a centre hole 81, corresponding to the central aperture 65a of the second housing 65. Slits 83 are disposed around the centre hole 81 of the housing cover 80 so as to correspond with the guide slits 65b of the second housing 65. Accordingly, the housing cover 80 has a plurality of holes 85 corresponding to the shaft bosses 65c of the second housing 65. An elastically-deformable locking protrusion 87 is formed around the boundary of the housing cover 80 to lock with the corresponding locking hole 65d formed in the outer circumference of the second housing 65.

The process of assembling the iris diaphragm driving apparatus of a camera apparatus according to the present invention is described below.

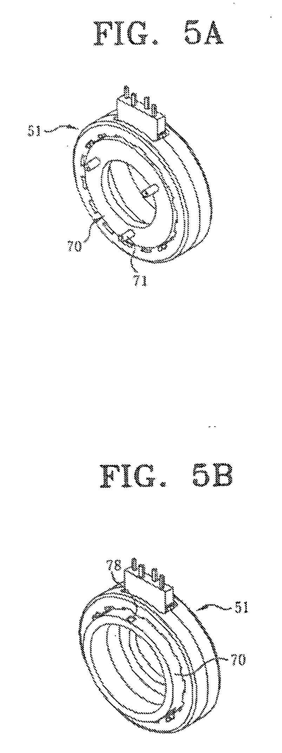

First, the stator assembly 51 as shown in Figure 2 is assembled. The rotor 70 is disposed within the assembled stator assembly 51. Referring to Figures 5A and 5B, the rotor 70 is rotatably inserted in the stator assembly 51 at a certain distance from the inner circumference of the stator assembly 51. In other words, the rotor 70 is not supported in the stator assembly 51. Then as shown in Figures 6A and 6B, the first and the second housings 61, 65 are engaged, enclosing the stator assembly 51. Accordingly, the driving pins 71 of the rotor 70 are inserted and supported in the guide slits 65b of the second housing 65. The bearing 78 on the outer circumference of the rotor 70 is supported in the first housing 61. When the motor 50 is assembled, the amount of angular rotation of the rotor 70 is in accordance with the lengths of the guide slits 65b.

The assembling of the motor 50 is then completed and the diaphragm blades 41, 42, 43 engage the driving pins 71 and the shaft bosses 65c, with certain parts overlapping with one another.

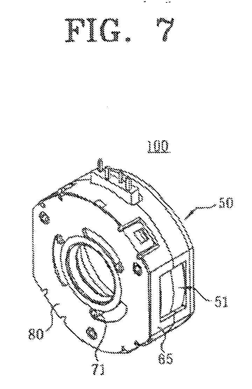

In order to prevent disassembly of the diaphragm blades 41, 42, 43 from the second housing 65, as shown in Figure 7, the housing cover 80 is assembled to the second housing 65. Accordingly, the iris diaphragm driving apparatus 100 is completely assembled.

Referring to Figure 1, the iris diaphragm driving apparatus 100, assembled as above, is installed within the cylindrical lens barrel 10. Other components of the cylindrical lens barrel 10, such as zoom lens module 20 and the focusing lens module 30 are assembled in a conventional manner.

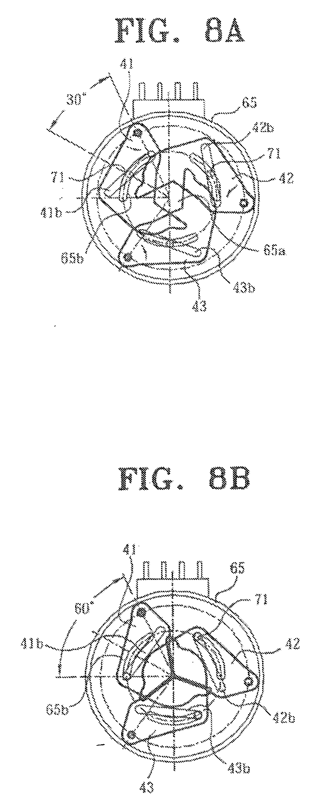

Referring now to Figures 4, 8A and 8B, the opening and closing of the iris diaphragm 40 according to the present invention is described below.

In Figure 4, the iris diaphragm 40 is completely open, which means the diaphragm blades 41, 42, 43 retracted radially outwards. When the rotor 70 is rotated by a predetermined angle, as shown in Figure 8A, the diaphragm blades 41, 42, 43 are rotated to partially close the central aperture 65a.

When the rotor 70 rotates further, as shown in Figure 8B, the diaphragm blades 41, 42, 43 are rotated to the extreme of the available rotation angle and, therefore, completely close the central aperture 65a. In Figure 8B, the diaphragm blades 41, 42, 43 are closed toward the centre of the central aperture 65a, while overlapping partially with one another. The diaphragm blades 41, 42, 43 are moved by the movement of the driving pins 71 of the rotor 70 which are rotated along the cam slits 41b, 42b, 43b. In the present embodiment, the cam slits 41b, 42b, 43b are substantially linear and, accordingly, the unit rotational angle of the rotor 70 is nonlinearly controlled to control the central aperture 65a, i.e.the f-number of the device in a stepwise manner.

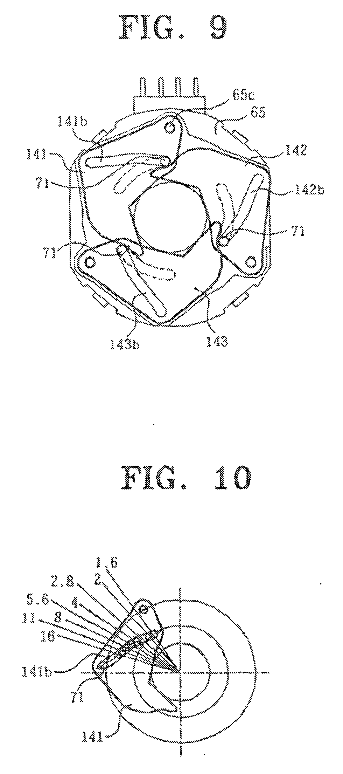

In another embodiment of the present invention, as shown in Figure 9, the diaphragm blades 141, 142, 143 each have a cam slit 141b, 142b, 143b which is, at least partially, non-linear. As shown in Figure 10, the cam slits 141b, 142b, 143b are formed in an appropriate configuration which can be obtained experimentally, to achieve a certain appropriate f-number when the driving pins 71 are moved by a predetermined rotational unit angle. Accordingly, when the rotor 70 is rotated by a predetermined angle, the f-number may be adjusted as desired. This alternative embodiment provides an advantage of easy control of opening and closing degree of the diaphragm blades 141, 142, 143.

As is described above in a few embodiments of the present invention, a motor, an iris diaphragm driving apparatus and a camera apparatus may have a simple structure so as to enable the driving of a lens shutter by using a motor which may be inserted in the lens barrel. Specifically, because there is no need to install the motor on the outer part of the lens barrel, a variety of designs may be selected for the outer part, and also, compactness is enabled.

Furthermore, because the lens shutters may be directly connected to the rotor of the motor, precision in controlling the product is improved, and as a result, reliability is enabled.

Although a few embodiments of the present invention have been shown and described, it would be appreciated by those skilled in the art that changes may be made in these embodiments.

## Claims

1. A camera apparatus, comprising:
a lens barrel(1 0);
a zoom lens module (20) installed within the lens barrel;
a focusing lens module (30) installed within the lens barrel;
an iris diaphragm (40) movably installed between the zoom lens module (20) and the focusing lens module (30), to adjust an amount of entering light in accordance with a moving position thereof; and
a driving unit (50) installed within the lens barrel (10) to drive the iris diaphragm, to provide a light path at a center thereof through which the light that has passed the zoom lens module (20) is passed, the driving unit comprising a motor housing (60), a stator (51) and a rotor (70) within the stator, the stator comprising a hollow bobbin (52) having a coil (52a) wound around an outer circumference **characterised by**
the stator (51) further comprising
a first stator member (53) to engage with a first end of the hollow bobbin (52), and having first fastening teeth (53a) formed at equal intervals; and
a second stator member (54) to engage with a second end of the hollow bobbin (52) so as to be in alignment with the first stator member (53), the second stator member having second fastening teeth (54a) formed at equal intervals and in a staggered manner with respect to the first fastening teeth, and
the hollow bobbin (52) further comprising a plurality of teeth slots (52c, 52d) in an inner surface to receive the first and the second fastening teeth.

2. The camera apparatus of claim 1, wherein the rotor (70) is rotatably supported in the motor housing (60), and having a hollow hole therein to provide a light path at a center of rotation.

3. The camera apparatus of claim 1 or 2, wherein at least one of the zoom lens module (20) and the focusing lens module (30) is disposed in the hollow hole of the rotor.

4. The camera apparatus according to any one of claims 1 to 3, wherein the iris diaphragm (40) is operable to control an aperture (65a) to adjust the amount of entering light and wherein the rotor (70) is annular and coaxially aligned with said aperture (65a).

5. The camera apparatus according to claim 4, wherein the iris diaphragm (40) comprises a plurality of blades (41, 42, 43) pivotably mounted to swing radially inwards and outwards to set said aperture (65a).

6. The camera apparatus according to claim 5, wherein each blade (41, 42, 43) is swung to set the aperture (65a) by a respective pin (71) mounted to said rotor (70) for rotation therewith.

7. The camera apparatus of claim 6, wherein the plurality of blades (41, 42, 43) each comprises:
a shaft hole (41a, 42a, 43a) as a center of rotation; and
a cam slit (41b, 42b, 43b) to engage with the respective driving pin (71), the driving pin being in movable engagement with the cam slit.

8. The camera apparatus of claim 6 or 7, wherein the driving pin (71) is formed by insert-molding such that the driving pin is exposed through one end of the rotor (70).

9. The camera apparatus according to any one of claims 6 to 8, wherein the motor housing (60) comprises:
a shaft boss (65c)to rotatably support the iris diaphragm (40); and
a guide part (65b) to guide the movement of the driving pin (71).

10. The camera apparatus according to claim 9, further comprising a housing cover (80) attached to the motor housing (60) to prevent the iris diaphragm (40) from releasing from the shaft boss (65c) and the driving pin (71).

11. The camera apparatus of claim 10, wherein the housing cover (80) comprises:
an engagement hole (85) corresponding to the shaft boss; and
a supporting slit (83) provided to correspond with the guiding part (65b) to support the driving pin (71).

12. The camera apparatus according to any one of claims 6 to 11, wherein the driving pin (71) is plural in number and the plurality of the driving pins are arranged at uniform intervals with respect to the light path (L).

13. The camera apparatus according to claim 6 or 7, wherein the driving pin (71) is integrally formed with the rotor (70).

14. The camera apparatus of any one of claims 6 to 13 wherein the motor housing (60) comprises:
a first housing (61) enclosing to support one side of the stator (51), and having a hollow space therein to provide the light path; and
a second housing (65) formed in alignment with the first housing with the stator interposed therebetween, the second housing having a hollow space therein to provide the light path.

15. The camera apparatus of any one of claims 6 to 14, wherein the rotor (70) has a plurality of bearing receiving holes (75a) on the outer circumference, and the motor housing (60) has a bearing guide hole.

16. The camera apparatus of claim 6 to 7, wherein the rotor (70) is a cylindrical magnet which is integrally formed with the driving pin (71) and magnetized at predetermined intervals along the direction of rotation.

17. The camera apparatus according to any one of claims 6 to 7, wherein the rotor (70) comprises:
a cylindrical magnet (73) that is magnetized at predetermined intervals along the direction of rotation, and rotatably supported in the motor housing;
a tubular sleeve (75) that is connected to a first end of the cylindrical magnet, and rotatably disposed within the stator assembly (51); and
a plate (77) that is connected to the first end of the magnet, and having a driving pin (71) to move the iris diaphragm (40) with the movement of the driving pin.

18. The camera apparatus of claim 17, wherein the driving pin (71) is integrally formed with the plate (77), and movably supported in the motor housing.

19. The camera apparatus of claim 7, wherein the cam slit (41b, 42b, 43b) takes on a substantially linear configuration and has a predetermined length.

20. The camera apparatus of claim 7, wherein the cam slit (41b, 42b, 43b) takes on a substantially curved configuration and has a predetermined length, and each lens blade (41, 42, 43) is movable to obtain an f-number which is set in proportion to the unit rotation angle of the rotor (70).

21. The camera apparatus of any one of claims 6 to 20, wherein three lens blades (41, 42, 43) are rotatably arranged around the light path in a radial direction at equal intervals, and three driving pins 71 are provided in alignment with the three lens blades.

22. The camera apparatus of any one of claims 1 to 9 and 11 to 21, further comprising a housing cover (80) which is removably attached to the motor housing (60), to rotatably support the iris diaphragm (40) which is interposed between the housing cover and the motor housing.

23. The camera apparatus according to any one of the preceding claims, wherein the camera apparatus is a camcorder.

24. A method of assembling a motorised camera, including an iris diaphragm (40) that is controlled by a motor (50) in a motor housing (60) inside a lens barrel (10) of the camera, the method comprising:
providing a stator assembly (51) in the motor housing;
rotatably inserting a rotor (70), with a bearing (78) on an outer circumference thereof, in the stator assembly (51) at a distance from an inner circumference of the stator assembly such that the rotor is not supported in the stator assembly;
**characterised by**
the method further comprising:
assembling the stator assembly (51) from an annular bobbin comprising a plurality of teeth slots (52c, 52d) in an inner surface of the bobbin and a first and a second stator members having first and second circumferentially-spaced fastening teeth (53a, 54a) by receiving the first and second fastening teeth (53a, 54a) in said teeth slots (52c, 52d) in a staggered manner; and
engaging first and second housings (61, 65) with each other to enclose the stator assembly (51), the second housing (65) including guide slits (65b) such that driving pins (71) protruding from the rotor (70) are inserted through and supported by the guide slits (65b) and the bearing (78) is supported by the first housing.

25. The method according to claim 24, further comprising engaging lens shutters (41, 42, 43) with the driving pins (71) and bosses (65c) to overlap each other.

26. The method according to claim 25, further comprising assembling a housing cover (80) with the second housing (65) to prevent disassembly of the shutters.

27. The method according to claim 26, wherein the motor (50) drives the rotor (70) to rotate such that a length of the rotation of the rotor is limited in accordance with the linear length of the guide slits (65b).

## Patentansprüche

1. Kameravorrichtung, umfassend:
einen Objektivtubus (10);
ein Zoomlinsenmodul (20), das innerhalb des Objektivtubus eingebaut ist ;
ein Fokussierlinsenmodul (30), das innerhalb des Objektivtubus eingebaut ist;
eine Irisblende (40), die zwischen dem Zoomlinsenmodul (20) und dem Fokussierlinsenmodul (30) beweglich eingebaut ist, um eine Menge von eintretendem Licht gemäß einer Bewegungsposition davon einzustellen; und
eine Antriebseinheit (50), die innerhalb des Objektivtubus (10) eingebaut ist, um die Irisblende anzutreiben, um einen Lichtweg in der Mitte davon bereitzustellen, durch welchen das Licht, das durch das Zoomlinsenmodul (20) durchgetreten ist, durchgelassen wird, wobei die Antriebseinheit ein Motorgehäuse (60), einen Stator (51) und einen Rotor (70) innerhalb des Stators umfasst und der Stator einen hohlen Spulenkörper (52) mit einer Spule (52a), die um einen Außenumfang gewickelt ist, umfasst, **dadurch gekennzeichnet, dass**:
der Stator (51) ferner umfasst:
ein erstes Statorelement (53) zum Eingreifen in ein erstes Ende des hohlen Spulenkörpers (52) und mit ersten Befestigungszähnen (53a), die in gleichen Abständen ausgebildet sind;
ein zweites Statorelement (54) zum Eingreifen in ein zweites Ende des hohlen Spulenkörpers (52), um mit dem ersten Statorelement (53) in Ausrichtung zu sein, wobei das zweite Statorelement zweite Befestigungszähne (54a) aufweist, die in gleichen Abständen und in Bezug auf die ersten Befestigungszähne in einer versetzten Weise ausgebildet sind, und
der hohle Spulenkörper (52) ferner eine Mehrzahl von Zahnschlitzen (52c, 52d) in einer Innenfläche aufweist, um die ersten und zweiten Befestigungszähne aufzunehmen.

2. Kameravorrichtung nach Anspruch 1, wobei der Rotor (70) im Motorgehäuse (60) drehbar getragen wird und ein hohles Loch darin aufweist, um einen Lichtweg am Drehungsmittelpunkt bereitzustellen.

3. Kameravorrichtung nach Anspruch 1 oder 2, wobei wenigstens eines des Zoomlinsenmoduls (20) und des Fokussierlinsenmodul (30) im hohlen Loch des Rotors angeordnet ist.

4. Kameravorrichtung nach einem der Ansprüche 1 bis 3, wobei die Irisblende (40) betätigt werden kann, um eine Apertur (65a) zu steuern, um die Menge von eintretendem Licht einzustellen, und wobei der Rotor (70) ringförmig und mit der Apertur (65a) koaxial ausgerichtet ist.

5. Kameravorrichtung nach Anspruch 4, wobei die Irisblende (40) eine Mehrzahl von Flügeln (41, 42, 43) umfasst, die schwenkbar angebracht sind, um radial nach innen und nach außen zu schwingen, um die Apertur (65a) einzustellen.

6. Kameravorrichtung nach Anspruch 5, wobei jeder Flügel (41, 42, 43) durch einen jeweiligen Stift (71), der am Rotor (70) zur Drehung damit angebracht ist, geschwungen wird, um die Apertur (65a) einzustellen.

7. Kameravorrichtung nach Anspruch 6, wobei die Mehrzahl von Flügeln (41, 42, 43) jeweils umfasst :
ein Wellenloch (41a, 42a, 43a) als einen Drehungsmittelpunkt; und
einen Nockenschlitz (41b, 42b, 43b) zum Eingreifen in den jeweiligen Antriebsstift (71), wobei der Antriebsstift in beweglichem Eingriff mit dem Nockenschlitz ist.

8. Kameravorrichtung nach Anspruch 6 oder 7, wobei der Antriebsstift (71) durch ein Zweistufen-Spritzgießverfahren gebildet ist, derart dass der Antriebsstift durch ein Ende des Rotors (70) exponiert ist.

9. Kameravorrichtung nach einem der Ansprüche 6 bis 8, wobei das Motorgehäuse (60) umfasst:
eine Wellennabe (65c), um die Irisblende (40) drehbar zu tragen; und
einen Führungsteil (65b), um die Bewegung des Antriebsstifts (71) zu führen.

10. Kameravorrichtung nach Anspruch 9, ferner umfassend eine Gehäuseabdeckung (80), die am Motorgehäuse (60) befestigt ist, um zu verhindern, dass sich die Irisblende (40) von der Wellennabe (65c) und dem Antriebsstift (71) löst.

11. Kameravorrichtung nach Anspruch 10, wobei die Gehäuseabdeckung (80) umfasst:
ein Eingriffsloch (85), das der Wellennabe entspricht; und
einen Tragschlitz (83), der so vorgesehen ist, dass er dem Führungsteil (65b) entspricht, um den Antriebsstift (71) zu tragen.

12. Kameravorrichtung nach einem der Ansprüche 6 bis 11, wobei der Antriebsstift (71) mehrfach an der Zahl ist und die Mehrzahl der Antriebsstifte in gleichmäßigen Abständen in Bezug auf den Lichtweg (L) angeordnet ist.

13. Kameravorrichtung nach Anspruch 6 oder 7, wobei der Antriebsstift (71) einstückig mit dem Rotor (70) ausgebildet ist.

14. Kameravorrichtung nach einem der Ansprüche 6 bis 13, wobei das Motorgehäuse (60) umfasst:
ein erstes Gehäuse (61), umschließend, um eine Seite des Stators (51) zu tragen, und mit einem Hohlraum darin, um den Lichtweg bereitzustellen; und
ein zweites Gehäuse (65), das in Ausrichtung mit dem ersten Gehäuse ausgebildet ist, wobei der Stator dazwischen eingefügt ist und das zweite Gehäuse einen Hohlraum darin aufweist, um den Lichtweg bereitzustellen.

15. Kameravorrichtung nach einem der Ansprüche 6 bis 14, wobei der Rotor (70) eine Mehrzahl von Lageraufnahmelöchern (75a) auf dem Außenumfang aufweist und das Motorgehäuse (60) ein Lagerführungsloch aufweist.

16. Kameravorrichtung nach Anspruch 6 bis 7, wobei der Rotor (70) ein zylindrischer Magnet ist, welcher einstückig mit dem Antriebsstift (71) ausgebildet ist und in vorbestimmten Abständen entlang der Drehrichtung magnetisiert wird.

17. Kameravorrichtung nach einem der Ansprüche 6 bis 7, wobei der Rotor (70) umfasst:
einen zylindrischen Magneten (73), der in vorbestimmten Abständen entlang der Drehrichtung magnetisiert und im Motorgehäuse drehbar getragen wird;
eine rohrförmige Hülse (75), die mit einem ersten Ende des zylindrischen Magneten verbunden und innerhalb der Statorgruppe (51) drehbar angeordnet ist; und
eine Platte (77), die mit dem ersten Ende des Magneten verbunden ist und einen Antriebsstift (71) aufweist, um die Irisblende (40) mit der Bewegung des Antriebsstifts (71) zu bewegen.

18. Kameravorrichtung nach Anspruch 17, wobei der Antriebsstift (71) einstückig mit der Platte (77) ausgebildet ist und im Motorgehäuse drehbar getragen wird.

19. Kameravorrichtung nach Anspruch 7, wobei der Nockenschlitz (41b, 42b, 43b) eine im Wesentlichen lineare Bauform annimmt und eine vorbestimmte Länge aufweist.

20. Kameravorrichtung nach Anspruch 7, wobei der Nockenschlitz (41b, 42b, 43b) eine im Wesentlichen gekrümmte Bauform annimmt und eine vorbestimmte Länge aufweist, und jeder Linsenflügel (41, 42, 43) beweglich ist, um eine Blendengröße zu erhalten, welche in Proportion zum Einheitsdrehwinkel des Rotors (70) eingestellt ist.

21. Kameravorrichtung nach einem der Ansprüche 16 bis 20, wobei drei Linsenflügel (41, 42, 43) in einer radialen Richtung in gleichen Abständen drehbar um den Lichtweg herum angeordnet sind und drei Antriebsstifte (71) in Ausrichtung mit den drei Linsenflügeln vorgesehen sind.

22. Kameravorrichtung nach einem der Ansprüche 1 bis 9 und 11 bis 21, ferner umfassend eine Gehäuseabdeckung (80), welche am Motorgehäuse (60) abnehmbar befestigt ist, um die Irisblende (40), die zwischen die Gehäuseabdeckung und das Motorgehäuse eingefügt ist, drehbar zu tragen.

23. Kameravorrichtung nach einem der vorhergehenden Ansprüche, wobei die Kameravorrichtung ein Camcorder ist.

24. Verfahren zum Zusammenbauen einer motorbetriebenen Kamera, die eine Irisblende (40) umfasst, die durch einen Motor (50) in einem Motorgehäuse (60) innerhalb eines Objektivtubus (10) der Kamera gesteuert wird, wobei das Verfahren umfasst:
Bereitstellen einer Statorgruppe (51) im Motorgehäuse;
drehbares Einführen eines Rotors (70) mit einem Lager (78) auf einem Außenumfang davon in die Statorgruppe (51) in einer Entfernung von einem Innenumfang der Statorgruppe, derart dass der Rotor nicht in der Statorgruppe getragen wird;
**dadurch gekennzeichnet, dass**
das Verfahren ferner umfasst:
Zusammenbauen der Statorgruppe (51) aus einem ringförmigen Spulenkörper, der eine Mehrzahl von Zahnschlitzen (52c, 52d) in einer Innenfläche des Spulenkörpers umfasst, und einem ersten und einem zweiten Statorelement mit ersten und zweiten umfänglich beabstandeten Befestigungszähnen (53a, 54a) durch Aufnehmen der ersten und zweiten Befestigungszähne (53a, 54a) in den Zahnschlitzen (52c, 52d) in einer versetzten Weise; und
In-Eingriff-bringen von ersten und zweiten Gehäusen (61, 65) miteinander, um die Statorgruppe (51) zu umschließen, wobei das zweite Gehäuse (65) Führungsschlitze (65b) umfasst, derart dass Antriebsstifte (71), die vom Rotor (70) vorstehen, durch die Führungsschlitze (65b) hindurch eingeführt und getragen werden und das Lager (78) durch das erste Gehäuse getragen wird.

25. Verfahren nach Anspruch 24, ferner umfassend ein In-Eingriff-bringen von Objektivverschlüssen (41, 42, 43) mit den Antriebsstiften (71) und Naben (65c), um einander zu überlappen.

26. Verfahren nach Anspruch 25, ferner umfassend ein Zusammenbauen einer Gehäuseabdeckung (80) mit dem zweiten Gehäuse (65), um ein Lösen der Verschlüsse zu verhindern.

27. Verfahren nach Anspruch 26, wobei der Motor (50) den Rotor (70) antreibt, um sich derart zu drehen, dass eine Länge der Drehung des Rotors gemäß der linearen Länge der Führungsschlitze (65b) begrenzt wird.

## Revendications

1. Appareil de prise de vues, comprenant :
un barillet d'objectif (10) ;
un module d'objectif zoom (20) installé à l'intérieur du barillet d'objectif ;
un module de lentille de mise au point (30) installé à l'intérieur du barillet d'objectif ;
un diaphragme à iris (40) installé de manière mobile entre le module d'objectif zoom (20) et le module de lentille de mise au point (30), afin de régler une quantité de lumière entrante conformément à une position mouvante de celui-ci ; et
une unité d'entraînement (50) installée à l'intérieur du barillet d'objectif (10) pour entraîner le diaphragme à iris, assurer un trajet de lumière au centre de celui-ci à travers lequel la lumière qui a traversé le module d'objectif zoom (20) est passée, l'unité d'entraînement comprenant un logement de moteur (60), un stator (51) et un rotor (70) à l'intérieur du stator, le stator comprenant une bobine creuse (52) ayant une bobine (52a) enroulée autour d'une circonférence externe **caractérisée par**
le stator (51) comprenant de plus :
un premier élément de stator (53) destiné à venir en prise avec une première extrémité de la bobine creuse (52), et ayant des premières dents d'assemblage (53a) formées à intervalles réguliers ; et
un second élément de stator (54) destiné à venir en prise avec une seconde extrémité de la bobine creuse (52) afin d'être en alignement avec le premier élément de stator (53), le second élément de stator ayant des secondes dents d'assemblage (54a) formées à intervalles réguliers et de manière décalée par rapport aux premières dents d'assemblage, et
la bobine creuse (52) comprenant de plus une pluralité de fentes de dents (52c, 52d) dans une surface interne pour recevoir les premières et les secondes dents d'assemblage.

2. Appareil de prise de vues selon la revendication 1, dans lequel le rotor (70) est supporté de manière rotative dans le logement de moteur (60), et ayant un orifice creux dans celui-ci pour assurer un chemin de lumière au niveau d'un centre de rotation.

3. Appareil de prise de vues selon la revendication 1 ou 2, dans lequel au moins l'un du module d'objectif zoom (20) et du module de lentille de mise au point (30) est disposé dans l'orifice creux du rotor.

4. Appareil de prise de vues selon l'une quelconque des revendications 1 à 3, dans lequel le diaphragme à iris (40) sert à commander une ouverture (65a) pour régler la quantité de lumière entrante et dans lequel le rotor (70) est annulaire et aligné de manière coaxiale avec ladite ouverture (65a).

5. Appareil de prise de vues selon la revendication 4, dans lequel le diaphragme à iris (40) comprend une pluralité de lamelles (41, 42, 43) montées de manière pivotante pour basculer de manière radiale vers l'intérieur et vers l'extérieur afin de régler ladite ouverture (65a).

6. Appareil de prise de vues selon la revendication 5, dans lequel chaque lamelle (41, 42, 43) est basculée afin de régler l'ouverture (65a) par une broche respective (71) montée sur ledit rotor (70) pour tourner avec celui-ci.

7. Appareil de prise de vues selon la revendication 6, dans lequel chacune de la pluralité de lamelles (41, 42, 43) comprend :
un orifice d'arbre (41a, 42a, 43a) servant de centre de rotation ; et
une entaille de came (41b, 42b, 43b) destinée à venir en prise avec la broche d'entraînement respective (71), la broche d'entraînement étant en prise mobile avec l'entaille de came.

8. Appareil de prise de vues selon la revendication 6 ou 7, dans lequel la broche d'entraînement (71) est formée par moulage sur prisonnier, de sorte que la broche d'entraînement est exposée à travers une extrémité du rotor (70).

9. Appareil de prise de vues selon l'une quelconque des revendications 6 à 8, dans lequel le logement de moteur (60) comprend :
un bossage d'arbre (65c) destiné à supporter de manière rotative le diaphragme à iris (40) ; et
une partie de guidage (65b) servant à guider le mouvement de la broche d'entraînement (71).

10. Appareil de prise de vues selon la revendication 9, comprenant de plus un couvercle de logement (80) fixé au logement de moteur (60) pour empêcher le diaphragme à iris (40) de se détacher du bossage d'arbre (65c) et de la broche d'entraînement (71).

11. Appareil de prise de vues selon la revendication 10, dans lequel le couvercle de logement (80) comprend :
un orifice de mise en prise (85) correspondant au bossage d'arbre ; et
une entaille de support (83) prévue pour correspondre à la partie de guidage (65b) afin de supporter la broche d'entraînement (71).

12. Appareil de prise de vues selon l'une quelconque des revendications 6 à 11, dans lequel la broche d'entraînement (71) est plurielle et la pluralité des broches d'entraînement est disposée à intervalles réguliers par rapport au trajet de lumière (L).

13. Appareil de prise de vues selon la revendication 6 ou 7, dans lequel la broche d'entraînement (71) est formée d'un seul tenant avec le rotor (70).

14. Appareil de prise de vues selon l'une quelconque des revendications 6 à 13, dans lequel le logement de moteur (60) comprend :
un premier logement (61) fermé pour supporter un côté du stator (51), et ayant un espace creux en son sein pour assurer le chemin de lumière ; et
un second logement (65) formé en alignement avec le premier logement, le stator étant interposé entre eux, le second logement ayant un espace creux en son sein pour assurer le chemin de lumière.

15. Appareil de prise de vues selon l'une quelconque des revendications 6 à 14, dans lequel le rotor (70) a une pluralité d'orifices de réception de palier (75a) sur la circonférence externe, et le logement de moteur (60) a un orifice de guidage de palier.

16. Appareil de prise de vues selon les revendications 6 à 7, dans lequel le rotor (70) est un aimant cylindrique formé d'un seul tenant avec la broche d'entraînement (71) et aimanté à intervalles prédéfinis selon le sens de rotation.

17. Appareil de prise de vues selon l'une quelconque des revendications 6 à 7, dans lequel le rotor (70) comprend :
un aimant cylindrique (73) qui est aimanté à intervalles prédéfinis selon le sens de rotation, et supporté de manière rotative dans le logement de moteur ;
un manchon tubulaire (75) qui est relié à une première extrémité de l'aimant cylindrique, et disposé de manière rotative à l'intérieur de l'ensemble stator (51) ; et
une plaque (77) qui est reliée à la première extrémité de l'aimant, et ayant une broche d'entraînement (71) pour faire bouger le diaphragme à iris (40) avec le mouvement de la broche d'entraînement.

18. Appareil de prise de vues selon la revendication 17, dans lequel la broche d'entraînement (71) est formée d'un seul tenant avec la plaque (77), et supportée de manière mobile dans le logement de moteur.

19. Appareil de prise de vues selon la revendication 7, dans lequel l'entaille de came (41b, 42b, 43b) adopte une configuration sensiblement linéaire et a une longueur prédéfinie.

20. Appareil de prise de vues selon la revendication 7, dans lequel l'entaille de came (41b, 42b, 43b) adopte une configuration sensiblement courbe et a une longueur prédéfinie, et chaque lamelle d'objectif (41, 42, 43) est mobile pour obtenir un nombre d'ouverture qui est établi proportionnellement à l'angle de rotation d'unité du rotor (70).

21. Appareil de prise de vues selon l'une quelconque des revendications 6 à 20, dans lequel trois lamelles d'objectif (41, 42, 43) sont disposées de manière rotative autour du trajet de lumière dans un sens radial à intervalles réguliers, et trois broches d'entraînement 71 sont disposées en alignement avec les trois lamelles d'objectif.

22. Appareil de prise de vues selon l'une quelconque des revendications 1 à 9 et 11 à 21, comprenant de plus un couvercle de logement (80) qui est attaché de manière amovible au couvercle de moteur (60), afin de supporter de manière rotative le diaphragme à iris (40) interposé entre le couvercle de logement et le logement de moteur.

23. Appareil de prise de vues selon l'une quelconque des revendications précédentes, dans lequel l'appareil de prise de vues est un caméscope.

24. Procédé d'assemblage d'un appareil de prise de vues motorisé, incluant un diaphragme à iris (40) qui est commandé par un moteur (50) dans un logement de moteur (60) à l'intérieur d'un barillet d'objectif (10) de l'appareil de prise de vues, le procédé comprenant :
la disposition d'un ensemble stator (51) dans le logement de moteur ;
l'insertion de manière rotative d'un rotor (70), avec un palier (78) sur une circonférence externe de celui-ci, dans l'ensemble stator (51) à une certaine distance d'une circonférence interne de l'ensemble stator, de sorte que le rotor n'est pas supporté dans l'ensemble stator;
**caractérisé par**
le procédé comprenant de plus :
l'assemblage de l'ensemble stator (51) à partir d'une bobine annulaire comprenant une pluralité de fentes de dents (52c, 52d) dans une surface interne de la bobine et des éléments de premier et second stators ayant des premières et secondes dents d'assemblage espacées de manière circonférentielle (53a, 54a) grâce à la réception des premières et secondes dents d'assemblage (53a, 54a) dans lesdites fentes de dents (52c, 52d) de manière décalée ; et
la mise en prise du premier et du second logement (61, 65) l'un avec l'autre afin d'enfermer l'ensemble stator (51), le second logement (65) incluant des entailles de guidage (65b), de sorte que les broches d'entraînement (71) faisant saillie hors du rotor (70) sont insérées à travers et supportées par les entailles de guidage (65b) et le palier (78) est supporté par le premier logement.

25. Procédé selon la revendication 24, comprenant de plus des obturateurs d'objectif venant en prise (41, 42, 43) avec les broches d'entraînement (71) et les bossages (65c) destinés à se chevaucher.

26. Procédé selon la revendication 25, comprenant de plus l'assemblage d'un couvercle de logement (80) avec le second logement (65) pour empêcher le désassemblage des obturateurs.

27. Procédé selon la revendication 26, dans lequel le moteur (50) entraîne la rotation du rotor (70), de sorte qu'une longueur de la rotation du rotor est limitée en fonction de la longueur linéaire des entailles de guidage (65b).
